# EUROPÄISCHE PATENTSCHRIFT

(11) **EP 2 005 020 B1**
(45) Veröffentlichungstag und Bekanntmachung des Hinweises auf die Patenterteilung: **28.10.2009**
(21) Anmeldenummer: 07723904.4
(22) Anmeldetag: 02.04.2007
(51) Int. Cl.: F16D 59/02, F16D 55/30

(54) **ELEKTROMAGNETISCH LÜFTENDE FEDERDRUCKBREMSE IN GESTALT EINER ZWEIKREISIGEN VIERKANTBREMSE**
ELECTROMAGNETICALLY RELEASED SPRING PRESSURE BRAKE IN THE FORM OF A DUAL-CIRCUIT SQUARE BRAKE
FREIN À RESSORT À AÉRATION ÉLECTROMAGNÉTIQUE SOUS FORME D'UN FREIN À QUATRE ARÊTES ET À DEUX CIRCUITS

(30) Priorität: 07.04.2006 DE 102006016434
(43) Veröffentlichungstag der Anmeldung: 24.12.2008
(73) Patentinhaber: Chr. Mayr GmbH & Co. KG, 87665 Mauerstetten (DE)
(72) Erfinder: EBERLE, Johann, 87660 Irsee (DE); KLINGLER, Günther, 86869 Oberostendorf (DE); WEISS, Harald, 87677 Stöttwang (DE)
(74) Vertreter: Ruschke, Hans Edvard
(86) Internationale Anmeldenummer: PCT/EP2007/002963
(87) Internationale Veröffentlichungsnummer: WO 2007/115730

(56) Entgegenhaltungen:
- EP-A- 1 058 021
- WO-A-01/14164
- DE-A1- 19 807 654
- US-A- 3 605 958

## Beschreibung

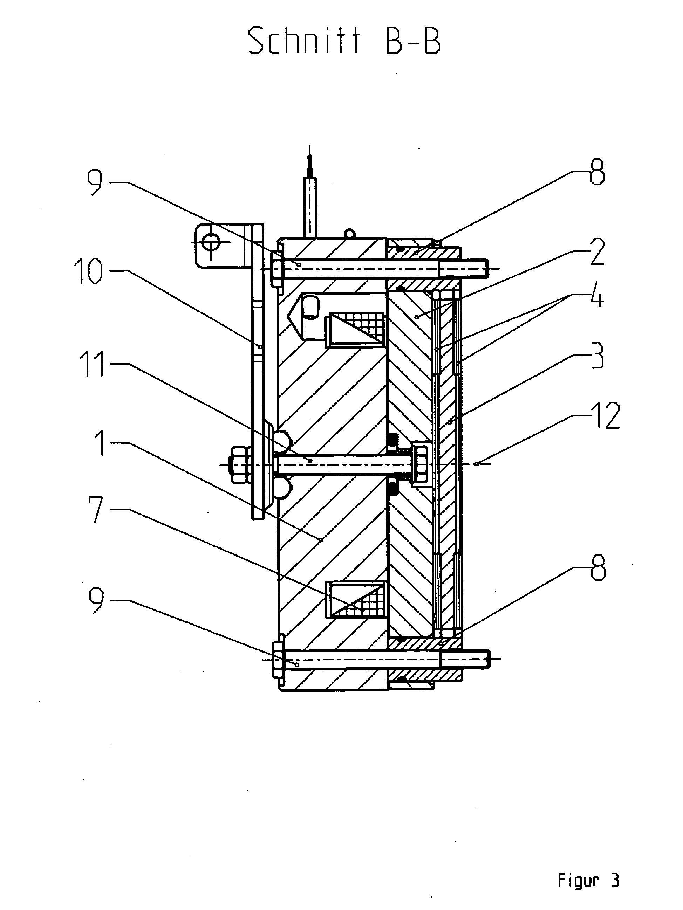

Aus der DE 19807654 A1 der Fa. Mayr ist bekannt, dass ein rotierendes Element wie eine Seiltrommel einer Aufzugsanlage von einer elektromagnetischen Federdruckbremse radial von außen, also am Außenumfang, oder von innen, oder an einer der Stirnflächen des rotierenden Elementes abgebremst werden kann. Die Federdruckbremse weist einen ringförmigen Spulenträger mit einer Spule darin und einen Reibbelag auf, welcher über eine Zwischenscheibe mit der Ankerscheibe verbunden ist. Es wird auch beschrieben, dass z.B. zwei solche Bremsen an der rotierenden Scheibe gegenüberliegend angreifen können durch die Winkelstellung A und Winkelstellung B wie in Anspruch 4 beschrieben (Fig.3).

Aus der DE 3400675 C2 ist bekannt, dass der Spulenträger zur Aufnahme der Spule nicht nur rund, sondern auch rechteckig ausgeführt werden kann. Aus der WO 01/59317 A1 der Fa. Mayr geht aus Figur 5 hervor, dass z.B. bei einer elektromagnetischen Federdruckbremse die zugehörige elektromagnetische Spule zweiteilig und nierenförmig ausgebildet sein kann. Mit einer zusätzlich geteilten Ankerscheibe wird eine Zweikreisigkeit (segmentartig) erreicht und möglichst viel Spulenraum ausgenutzt. Es bestünde auch die Möglichkeit, eine sogenannte ovale Spule in einen Spulenkörper einzubringen.

Im vorliegenden Zusammenhang bedeutet "zweikreisige" Bremse, dass im Interesse einer erhöhten Betriebssicherheit der Bremse zwei separat voneinander funktionsfähige Bremsenteile vorhanden sind, sodass der eine Bremsenteil auch dann noch funktioniert, wenn der andere Bremsenteil aufgrund irgendwelcher Störungen blockiert.

Bei der sog. Segmentbremse nach der früher angemeldeten aber nachveröffentlichten DE 10 2005 022 898 A1 werden zwei eigenständige Bremsen mit rechteckigem Umriss mit jeweils einer darin angeordneten ovalen Spule und einer zugehörigen Ankerscheibe gezeigt. Bei stromloser Spule drückt jede Ankerscheibe auf den zwischen den zwei Rechteckbremsen angeordneten gemeinsamen Rotor, wobei der Rotor axial verschieblich auf einer Zahnnabe angebracht ist. Die Zweikreisigkeit der Bremswirkung wird durch die zwei eigenständigen Rechteckbremsen erzeugt, die jeweils aus Spulenträgergehäuse mit Spule und Ankerscheibe bestehen. Auch die weiteren Ausführungsformen der DE 10 2005 022 898 A1 zeigen zwei oder mehr separate eigenständige Federdruckbremsen, die gleichzeitig auf den abzubremsenden Rotor wirken.

Ausgehend von dem voranstehend erörterten Stand der Technik bzw. von der früher angemeldeten Lösung wird es als die Aufgabe der vorliegenden Erfindung angesehen, eine einfachere und kostengünstige zweikreisige Bremse zu schaffen, die eine bessere Ausnutzung der Reibflächen durch einen größeren Durchmesser des Rotors bei gleichen Außenabmessungen der Bremse ermöglicht, bzw. bei gleich großem Rotor kleinere Außenabmessungen der gesamten Bremse schafft. Es sollen weniger Bauteile in einer kompakteren Bauform und eine einfachere Abdichtungs- oder Abdeckungsmöglichkeit der einheitlichen Bremse vorgesehen werden.

Die Aufgabe wird erfindungsgemäß dadurch gelöst, dass nicht zwei eigenständige rechteckige gleiche Bremsen auf den Rotor mit Reibbelag drücken, sondern dass stattdessen nur noch ein einheitliches rechteckiges Spulenträgergehäuse mit zwei vorzugsweise ovalen Spulen darin vorgesehen ist, wobei aber zwei separate zugeordnete Ankerscheiben vorgesehen sind, die symmetrisch auf jeweils zwei der insgesamt vier Befestigungsschrauben des einheitlichen Spulenträgergehäuses geführt sind und bei stromloser Spule auf den Rotor mit Reibbelag drücken. Bisher wurden pro Bremse vier Anschraubungen verwendet und somit insgesamt bei zwei Bremsen acht Anschraubungen notwendig. Nach der vorliegenden Erfindung sind jetzt nur noch insgesamt vier Anschraubungen notwendig, welche im Durchmesser weiter außen liegen, so dass der Reibradius und entsprechend das Drehmoment bei sonst gleichen Außenabmessungen der Bremse vergrößert und die Reibbelagpressung verkleinert wird. Durch die zwei getrennten, vorzugsweise ovalen Spulen mit zugeordneter separat beweglicher jeweiliger Ankerscheibe wird trotz nur eines einzigen Spulenträgergehäuses eine Zweikreisigkeit der Bremse erreicht.

Nachdem nur noch ein einziger einheitlicher rechteckiger Spulenträger vorhanden ist, kann die Bremse auf einfachere Weise abgedichtet (Gummihaube oder ähnliches) oder abgedeckt werden, um sie vor Fremdkörpern oder Schmutz zu schützen.

In den beigefügten Zeichnungen ist ein Ausführungsbeispiel der Erfindung dargestellt. Darin zeigt:
- **Figur 1**: ein Schrägbild des einstückigen Spulenträgers mit zwei darin integrierten ovalen Spulen wie in Fig. 2 angedeutet und zwei auf seiner Stirnfläche beiderseits des zentralen Rotors angeordneten, voneinander separaten Ankerscheiben, von denen jede auf nur zwei Befestigungsschrauben symmetrisch geführt ist und bei stromloser Spule auf die Reibbeläge des Rotors drückt, der axial auf der Zahnnabe geführt ist;
- **Figur 2**: die Rückansicht der Bremse, wobei die Lage der zwei ovalen Spulen im Spulenträgergehäuse gestrichelt eingezeichnet ist;
- **Figur 3**: den Schnitt B-B der Figur 2, in dem die Anschraubung der Federdruckbremse an eine nicht näher dargestellte Maschinenwand mittels der Befestigungsschrauben und die Handbetätigung zum Lösen der Federdruckbremse bei stromloser Spule dargestellt ist;
- **Figur 4**: den Schnitt C-C der Figur 2, in dem die Druckfedern der Federdruckbremse dargestellt sind, die der Magnetkraft der Spulen bei eingeschaltetem Strom entgegenwirken; und
- **Figur 5**: den Schnitt A-A der Figur 2, in dem der Rotor und die verzahnte Nabe dargestellt sind, auf der der Rotor axial verschieblich ist.

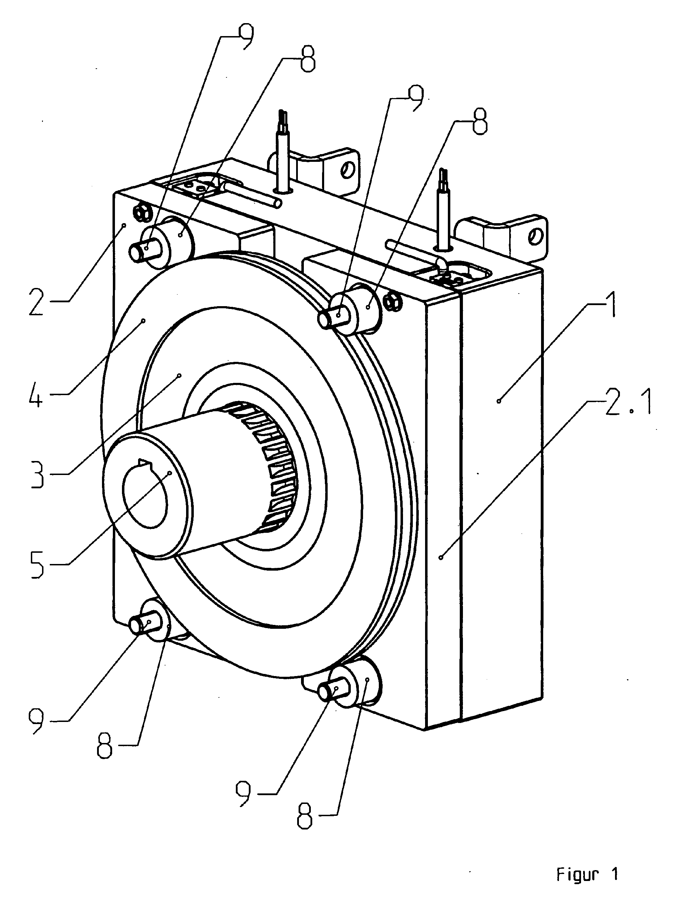

Die **Figur 1** zeigt die komplette Bremse im Schrägbild, wobei der einteilige Spulenträger 1 mit seinem quadratischen oder rechteckigen Gehäuse mit den beiden separat arbeitenden Ankerscheiben 2 und 2.1 dargestellt ist, auf die die jeweiligen, vorzugsweise ovalen Spulen im einstückigen Spulenträgergehäuse magnetisch einwirken.

Der Rotor 3 mit seinen beiden beiderseits aufgeklebten Reibbelägen 4 ist axial verschiebbar auf der verzahnten Nabe 5 aufgebracht. Die vier Abstandsbuchsen 8, von denen jeweils zwei beim Abbremsen das Drehmoment der jeweiligen Ankerscheibe aufnehmen, sind auf den vier Befestigungsschrauben 9 geführt.

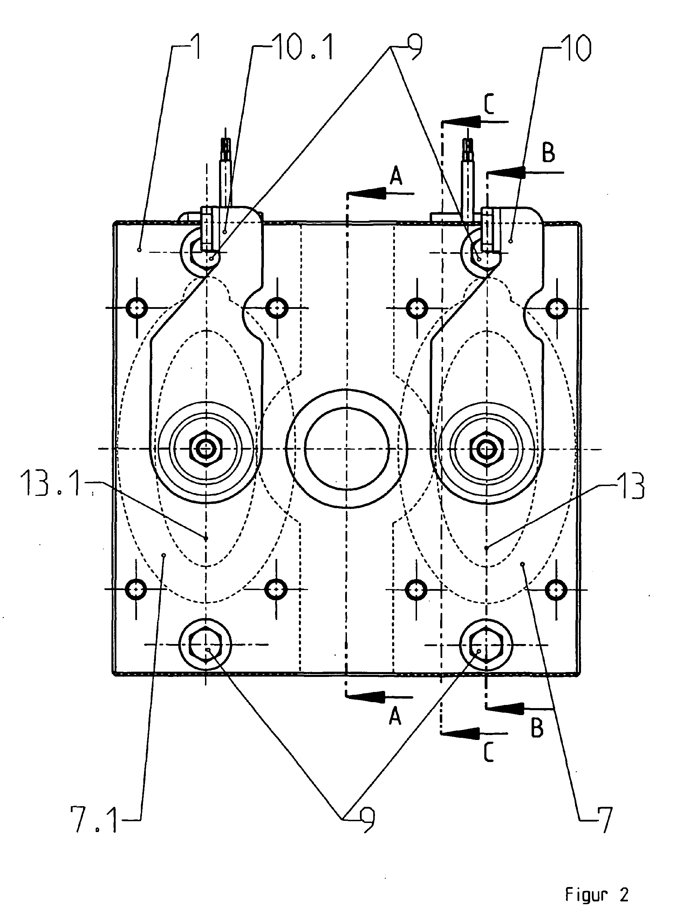

Die **Figur 2** zeigt sehr deutlich die Lage der beiden ovalen Spulen 7 und 7.1, welche im Spulenträger 1 mit seinem quadratischen oder rechteckigen Gehäuse etwa in der gleichen Ebene neben einander eingegossen sind. Auf der in Figur 2 gezeigten Rückseite des Spulenträgers 1 sind auch die Köpfe der vier Befestigungsschrauben 9 zu erkennen. Für das im Notfall (z.B. Stromausfall) womöglich erforderliche manuelle bzw. mechanische Lösen bzw. Abheben der Ankerscheiben 2 und 2.1 von dem Rotor 3 und seinen Reibbelägen 4 sind jeweils 2 Handlüftbügel 10 und 10.1 auf der Rückseite angebracht.

In **Figur 3** wird gezeigt, dass die Befestigungsschrauben 9 mit den darauf angeordneten Abstandsbuchsen 8 axial an eine nicht dargestellte Maschinenwand angebaut werden können, die sich in Fig. 3 auf der rechten Seite der Anordnung befinden würde. Mit jedem der Handhebel 10 kann über eine zugeordnete zentrale Schraube 11 die Ankerscheibe 2 von Hand axial an den Spulenträger 1 herangezogen werden; damit wird der Rotor 3 mit den zwei Reibbelägen 4 bei stromlosen Spulen freigegeben und kann trotz der andauernden Wirkung der Druckfedern 6 umlaufen.

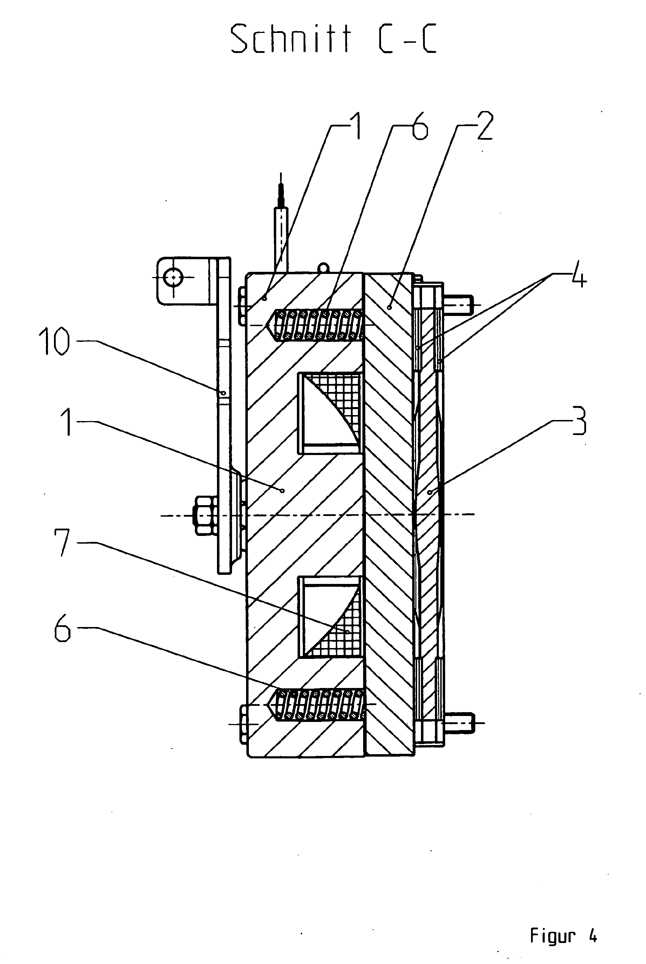

In **Figur 4** wird die Funktion der Bremse genauer erkennbar. Wird Spannung auf die Spule 7 gegeben, baut sich ein elektrisches Magnetfeld auf, so dass die Ankerscheibe 2 über den nicht genauer sichtbaren Luftspalt zwischen Spulenträger 1 und Ankerscheibe 2 angezogen wird. Dies erfolgt entgegen der Kraft der Druckfedern 6, welche im Spulenträger 1 untergebracht sind und gegen die Ankerscheibe 2 drücken. Somit wird der Rotor 3 mit den beiden Reibbelägen 4 bei Erregung der Spulen freigegeben und kann umlaufen.

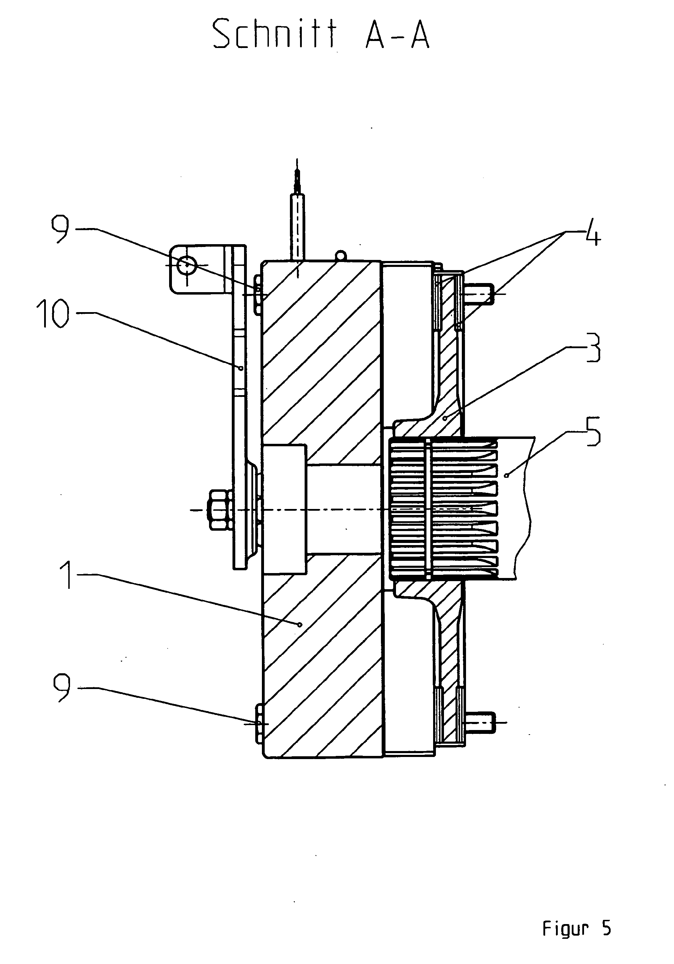

Die **Figur 5** zeigt den axial verschiebbaren Rotor 3 auf der verzahnten Nabe 5. Wird die Spannung an den Spulen 7 bzw. 7.1 weggenommen (siehe Fig. 2 und 4), werden die zwei Ankerscheiben 2 bzw. 2.1 über die Druckfedern 6 gegen den Rotor 3 mit den beiden Reibbelägen 4 an die nicht dargestellte Maschinenwand gedrückt und somit eine Bremsung des Rotors 3 erzeugt. Das Bremsmoment wird dann über die Reibbeläge 4, welche mit dem Rotor 3 verbunden sind, auf die verzahnte Nabe 5 übertragen (Figur 5), so dass das Bremsmoment z.B. mittels der Passfedemut in der verzahnten Nabe 5 an eine beliebige, in Fig.1 nicht dargestellte zentrale Welle übertragen werden kann.

Nachdem sich im einheitlichen Spulenträger 1 zwei Spulen 7 und 7.1 befinden und die zugeordneten zwei Ankerscheiben 2 und 2.1 jeweils getrennt betätigbar sind, ist eine sogenannte Zweikreisigkeit und somit ein redundantes Bremssystem mit zwei separaten Bremsenteilen vorhanden. Beim Ausfall einer Spule bzw. bei Verklemmen einer Ankerscheibe wären noch immer 50 % des gesamten Drehmomentes aufgrund des zweiten bzw. anderen Bremsenteils vorhanden.

Sollte ein kompletter Stromausfall erfolgen, was dann aufgrund der Druckfedern 6 zur Betätigung bzw. zum Einfallen der Bremse führt, so dass die Bremse eventuell manuell gelöst werden muss, können mit dem Handhebel 10 und 10.1 beide Ankerscheiben gegen den Federdruck der Druckfedern 6 angezogen werden, wodurch der Rotor 3 mit den beiden Reibbelägen 4 freigeben wird und umlaufen kann. Es können aber auch beide Handhebel 10 und 10.1 jeweils getrennt betätigt werden.

Insgesamt wird eine elektromagnetisch lüftende Federdruckbremse zum Anbau an eine Maschinenwand oder ähnliches beschrieben, wobei die Bremse einen rechteckigen einheitlichen Spulenträger 1 mit zwei vorzugsweise ovalen, einander im Spulenträger beiderseits der Achse des Rotors 3 benachbart gegenüberliegenden Spulen 7, 7.1 mit zueinander parallelen Spulenachsen aufweist, wobei den Spulen zwei voneinander separate rechteckige Ankerscheiben 2, 2.1 zugeordnet sind, die bei ausbleibendem Spulenstrom per Federdruck auf den gemeinsamen Rotor 3 mit einem auf jeder Stirnseite angebrachten Reibbelag 4 drücken: der Rotor 3 ist auf einer axial verzahnten Nabe 5 axial beweglich. Die vier Befestigungsschrauben 9 sind in der Nähe der vier Ecken des rechteckigen Spulenträgergehäuses 1 dicht außerhalb des Umfanges des Rotors 3 bzw. der Reibbeläge 4 positioniert; jeweils zwei davon bilden eine Parallelführung für die zwei Ankerscheiben 2, 2.1 am radial größtmöglichen Durchmesser des Rotors 3, indem die zugehörigen zwei Befestigungsschrauben jede Ankerscheibe am oberen bzw. unteren Rand in Fig. 1 symmetrisch bzw. mittig durchsetzen. Für jede Ankerscheibe 2, 2.1 ist ein eigener Handhebel 10 bzw. 10.1 mit einem Handlüftbolzen 11 vorgesehen.

Im Vergleich zu einer Konstruktion mit zwei völlig voneinander getrennten Rechteckbremsen mit vorzugsweise ovalen Spulen nach der nicht vorveröffentlichten DE 10 2005 022 898 A der Anmelderin wird durch die vorliegend beschriebene Erfindung erreicht, dass eine noch einfachere, kostengünstige zweikreisige Bremse geschaffen wird, die eine bessere Ausnutzung der Reibflächen durch einen größeren Durchmesser des Rotors bei gleichen Außenabmessungen der Bremse ermöglicht bzw. bei unverändertem Rotor bzw. Bremsmoment kleinere Außenabmessungen der Bremse gestattet. Dies wird durch einen einstückigen Vierkantspulenträger mit einem zentral darin angeordnetem Bremsrotor mit zwei zueinander benachbarten, vorzugsweise ovalen Spulen im Spulenträger erreicht, denen zwei voneinander getrennte Ankerscheiben zugeordnet sind, die jeweils auf zwei der insgesamt vier zueinander parallelen Befestigungsschrauben 9 mittig geführt werden, die den Spulenträger an der Maschinenwand befestigen.

Zusammengefasst geht es bei der vorliegenden Erfindung um eine elektromagnetisch lüftende Federdruckbremse zum Anbau an eine Maschinenwand oder ähnliches, wobei die Bremse einen einheitlichen rechteckigen Spulenträger 1 mit zwei vorzugsweise ovalen, zueinander benachbarten Spulen 7, 7.1 darin enthält, denen zwei separat bewegliche rechteckige Ankerscheiben 2, 2.1 zugeordnet sind, die bei stromlosen Spulen 7,7.1 auf einen gemeinsamen zentralen Rotor 3 mit zwei auf jeder Seite angebrachten Reibbelägen 4 drücken, wobei der Rotor 3 auf einer axial verzahnten Nabe 5 axial beweglich ist. Jeweils zwei der vier Befestigungsschrauben 9 dienen zur Parallelführung jeder der Ankerscheiben 2, 2.1, und zwar in deren Mittellängsachsen 13, 13.1 am radial größtmöglichen Durchmesser des Rotors 3. Für jede Ankerscheibe 2, 2.1 ist ein Handhebel 10 mit einem Handlüftbolzen 11 vorgesehen. Durch die Erfindung wird eine einfachere, kostengünstige Bremse mit zwei separaten Bremskreisen geschaffen, was eine bessere Ausnutzung der Reibflächen durch einen größeren Durchmesser des Rotors bei gleichen Außenabmessungen der Bremse bzw. bei unverändertem Rotor kleinere Außenabmessungen ermöglicht. Dies wird durch einen einheitlichen bzw. einstückigen Vierkantspulenträger mit zwei benachbarten Spulen darin und jeweils zwei getrennten, separat beweglichen Ankerscheiben beiderseits des zentralen Bremsrotors 3 erreicht.

### Bezugszeichenliste:

- 1.: Spulenträger/Spulenträgergehäuse
- 2.: Ankerscheibe rechts
- 2.1: Ankerscheibe links
- 3.: Rotor/Bremsrotor
- 4.: Reibbeläge
- 5.: Verzahnte Nabe
- 6.: Druckfedern
- 7.: Spule rechts
- 7.1: Spule links
- 8.: Abstandsbuchsen
- 9.: Befestigungsschrauben
- 10.: Handlüftbügel rechts
- 10.1: Handlüftbügel links
- 11.: Handlüftbolzen
- 12, 12.1: Hauptachsen der Spulen 7, 7.1
- 13, 13.1: Mittellängsachse von 2 bzw. 2.1

## Patentansprüche

1. Elektromagnetisch lüftende Federdruckbremse zum Anbau an eine Maschinenwand oder ähnliches,
**dadurch gekennzeichnet, dass** die Bremse einen im Umriss rechteckigen oder quadratischen einheitlichen Spulenträger (1) mit zwei jeweils seitlich nebeneinander liegenden Spulen (7 und 7.1) aufweist, denen jeweils zwei separate benachbarte Ankerscheiben (2 und 2.1) zugeordnet sind, welche auf einen gemeinsamen zentralen Rotor (3) mit zwei auf jeder Seite angebrachten Reibbelägen (4) drücken, wobei der Rotor (3) auf einer axial verzahnten Nabe (5) axial beweglich ist

2. Federdruckbremse nach Anspruch 1,
**dadurch gekennzeichnet, dass** die Befestigungsschrauben (9) symmetrisch in der Ankerscheibe (2, bzw. 2.1) und radial am größtmöglichen Durchmesser angebracht werden.

3. Federdruckbremse nach Anspruch 1,
**dadurch gekennzeichnet, dass** für jede Ankerscheibe (2, bzw. 2.1) ein Handhebel (10, 10.1) mit Handlüftbolzen (11) vorgesehen ist.

4. Federdruckbremse nach Anspruch 1,
**dadurch gekennzeichnet, dass** jede der langgestreckten Ankerscheiben (2, 2.1) an ihren Schmalseiten im Bereich ihrer Mittellängsachsen (13, 13.1) symmetrisch auf zwei der vier Befestigungsschrauben (9) direkt - oder indirekt über Abstandsbuchsen (8) - geführt ist

## Claims

1. An electromagnetically releasing spring-pressure brake for mounting on a machine wall or the like, **characterized by** comprising a rectangularly or squarely contoured unitary coil support (1) housing two coils (7 and 7.1) placed in a side-by-side relationship, each said coils having associated therewith a pair of separate neighbouring armature disks (2 and 2.1) exerting pressure onto a common central rotor (3), said rotor having a pair of friction liners (4) attached to either face thereof and being axially movable on an axially splined hub (5).

2. Spring-pressure brake as in claim 1, **characterized by** threaded fasteners (9) being positioned symmetrically in the armature disk (2; 2.1) and at the radially largest possible diameter thereof.

3. Spring-pressure brake as in claim 1, **characterized in that** each armature disk (2; 2.1) has associated therewith a manual lever (10, 10.1) with a manual release bolt (11).

4. Spring-pressure brake as in claim 1, **characterized by** the elongated armature disks (2, 2.1) each being guided symmetrically and directly or indirectly via spacer sleeves (8) at their short side in the area of their central longitudinal axis (13, 13.1) on two of said four threaded fasteners (9).

## Revendications

1. Frein à ressort à desserrage électromagnétique pour le montage sur une paroi de machine ou analogue, **caractérisé en ce que** le frein présente un porte-bobines uniforme (1) de contour rectangulaire ou carré unitaire avec deux bobines (7 et 7.1) juxtaposées chacune latéralement, auxquelles sont respectivement attribués deux disques d'induit (2 et 2.1) voisins séparés, qui pressent sur un rotor (3) central commun par deux garnitures de friction (4) montées sur chaque côté, le rotor (3) étant mobile axialement sur un moyeu (5) à denture axiale.

2. Frein à ressort suivant la revendication 1, **caractérisé en ce que** les vis de fixation (9) sont montées symétriquement dans le disque d'induit (2 et/ou 2.1) et radialement au diamètre le plus grand possible.

3. Frein à ressort suivant la revendication 1, **caractérisé en ce qu'un** levier à main (10, 10.1) avec un goujon d'aération manuel (11) est prévu pour chaque disque d'induit (2 et/ou 2.1).

4. Frein à ressort suivant la revendication 1, **caractérisé en ce que** les disques d'induit allongés (2, 2.1) sont guidés chacun symétriquement sur leurs petits côtés, dans la zone de leurs axes médians longitudinaux (13, 13.1), sur deux des quatre vis de fixation (9), directement ou indirectement par l'intermédiaire de douilles d'écartement (8).
